(19) Europäisches Patentamt / European Patent Office / Office européen des brevets

(11) **EP 3 096 227 A1**

(12) **EUROPEAN PATENT APPLICATION**

(43) Date of publication:
**23.11.2016 Bulletin 2016/47**

(51) Int Cl.:
***G06F 9/50*** (2006.01)

(21) Application number: **15305749.2**

(22) Date of filing: **19.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Institut Mines-Telecom / Telecom Sudparis**
**91000 Evry (FR)**

(72) Inventors:
• **Ahvar, Ehsan**
**91000 Evry (FR)**
• **Ahvar, Shohreh**
**91000 Evry (FR)**
• **Crespi, Noël**
**75116 Paris (FR)**
• **Garcia-Alfaro, Joaquin**
**91300 Massy (FR)**

(74) Representative: **Nony**
**11 rue Saint-Georges**
**75009 Paris (FR)**

(54) **RESOURCE ALLOCATION METHOD IN DISTRIBUTED CLOUDS**

(57)     A method for allocating resources in a distributed cloud computing including a plurality (N) of interconnected datacenters (V) for performing a user task requiring a plurality (NVM) of virtual machines (VM), the method comprising:

a) generating a plurality of sets (F) of datacenters, each set ($F_n$) comprising a different respective first datacenter (V) and one or several additional datacenters, the additional datacenter(s) being iteratively selected among datacenter candidates ($V_i$) chosen among not-yet selected datacenters of said plurality of datacenters, until covering the needs in virtual machines (NVM) for performing the user task, at least by comparing communication cost values ($C_i$) computed for each datacenter candidate ($V_i$) based at least on the communication cost ($g_i$) from already-selected datacenter(s) of the set ($F_n$) to the current candidate ($V_i$) and on an estimated communication cost ($h_i$) induced by adding the remaining datacenters needed after selecting the current datacenter candidate, and

b) selecting a set ($F_B$) of datacenters (V) for performing the user task based at least on a comparison of the total communication costs of the sets (F) of datacenters generated at step a).

Fig. 2

**Description**

The present invention relates to methods and systems for allocating resources in a distributed cloud computing.

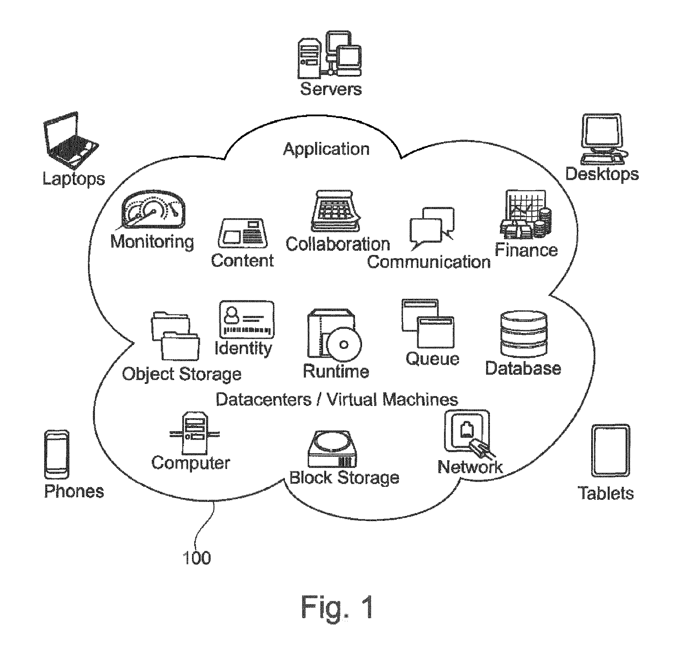

Cloud computing has recently been widely deployed. A cloud computing network 100 involves groups of remote servers and software networks that allow centralized data storage, online access to computer services or resources, and execution of applications and user tasks, requested for example through laptops, desktops, smartphones or tablets, as illustrated in Figure 1.

Well-known clouds comprise datacenters, referring to facilities of the network comprising at least one computer infrastructure, and virtual machines allocated to one datacenter, the virtual machines being emulations of particular computer systems.

Cloud resources can be divided into two major types: computing resources, referring for example to control processing units (CPU), datacenters and/or servers, and network resources, referring for example to routers, node communications, network traffic and/or available bandwidth. Both types of resources have an influent impact on cloud cost and performance.

In distributed clouds, unlike centralized clouds, small datacenters are geographically dispersed and interconnected over a wide-area network. Due to geographical distribution of datacenters, network resources, especially bandwidth, play an important role on distributed clouds performance. Especially for a large-size process-intensive application, for example weather forecasting, bandwidth limitation and costs reduction are a big challenge, because the work load requires a lot of virtual machines, which may be distributed in more than one datacenter. Therefore, network resources have become a bottleneck that limits networking performance of clouds for supporting large-size process-intensive applications.

If possible, the placement of all the virtual machines of a task into a same datacenter is the best solution to reduce communication cost. Otherwise, to provide service for a large-size user task, it may be possible to select a few number of high capacity datacenters located far from each other in terms of number of intermediate switches or number of intermediate devices between them, also named *"hop count"*. However, long distance among datacenters makes heavier traffic in the network.

Another possibility is to select a bigger number of lower capacity datacenters located closer to each other. Cooperation between more datacenters induces as well heavier traffic in the network.

One efficient solution to improve bandwidth availability is to reduce network traffic. Other optimization techniques are caching, consisting of using high-speed buffers, and compression.

Known resource allocation techniques focus on reducing traffic inside large-size datacenters of centralized clouds, comprising large-size datacenters not configured to share a task.

The article of Dong et al. "energy saving victual machine placement in cloud, data centerss", in 13th IEEE/ACM international symposium on cluster, cloud, and grid computing, 2013, describes a model-based virtual machines allocation method inside a datacenter that considers both computing and network resources at the same time to improve resources utilization as well as energy consumption. In this method, it is necessary and thus assumed that traffic matrix information is available for building the model, which is difficult to put into practice.

A traffic-aware virtual machines placement method inside a datacenter is described in the article of Meng et al. "improving the scalability of datacenter network with traffic-aware victual machine placement,", in Proceedings of the 29th conference on Information communications, 2010. The method allows localizing large chunk of network traffic and reducing load of high level switches.

The article of Xin Li et al. "Let's Stay Together: Towards Traffic Aware Virtual Machine Placement in Data Centers", in Proceedings of the 33rd IEEE International Conference on Computer Communications, 2014, studies virtual machines placement inside a datacenter to achieve a trade-off between computing cost of physical machines and network cost. This method assumes that network cost is mainly determined by inter-servers traffic, and does not assume that inter-virtual machines traffic is previously known.

In distributed clouds, the size of each datacenter is smaller than in centralized clouds, and traffic management among datacenters is a more important issue than resources management inside datacenters.

The article of Alicherry et al. "Network-Aware Resource Allocation in Distributes Clouds", in IEEE conference on Information communications, 2012, proposes algorithms for network-aware selection of datacenters and allocation of virtual machines in distributed clouds, focusing on improving completion time for doing a task.

International application WO 2013/085703 discloses an optimization mechanism in distributed clouds, focusing on reducing latency when the work load of application suddenly changes, by reallocating load of a datacenter to other ones, based on a function defining performance characteristics of the cloud.

Patent application US 2012/0324112 relates to a method for balancing virtual machine loads between hardware platforms in a network, based on parameters of utilization information of the platforms.

A known algorithm of virtual machines placement, called *«Random algorithm*", randomly selects a datacenter from a distributed cloud and puts as many virtual machines from the user request as possible in that selected datacenter.

If the capacity of the selected datacenter becomes full and still some virtual machines of the request are not allocated, then the algorithm randomly chooses the next datacenter(s) to allocate the remaining virtual machines.

In another known algorithm of virtual machines placement, called *"Greedy algorithm"*, the datacenter with maximum capacity, that is to say with the bigger number of available virtual machines, is selected and the algorithm allocates as many virtual machines from the user request as possible on that datacenter. If there are remaining virtual machines in the request to be allocated, then the next datacenter with the largest number of available virtual machines is selected. This algorithm only considers the capacity of the selected datacenters.

In order to reduce network traffic in distributed clouds, in a case of a large-size process-intensive application, it is known to use some metrics, such as the number of selected datacenters (NSD) and datacenter-to-datacenter communication metric (DDC). The NSD metric refers to computing resources, and the DDC metric refers to network resources, that is to say to communication among the datacenters.

Improving one of the metrics can affect the other one. For example, for providing service for a large-size user task, it is known to select a few number of high capacity datacenters that are located far from each other, in terms for example of number of intermediate switches, and/or *"hop count"*. Another known possibility is selecting more datacenters of lower capacity that are located closer to each other. Longer distance among datacenters as well as more datacenters cooperation makes heavier traffic in the network.

Selecting the best datacenter to allocate user virtual machines based on only one metric, for example the NSD one, is easily feasible. The NSD of all possible datacenters can be compared and the one(s) with the best NSD can be selected. But considering both DDC and NSD metrics is more complex.

Classically, in order to accomplish a user task, datacenters are selected one by one and step by step. Selecting the most effective datacenter, in terms of capacity, location, traffic, at each step, without considering the situation of previous selected datacenters and estimating the number and situations of future datacenters, may be sub-optimal for reducing the total traffic, mainly the bandwidth needed, of the task.

There is thus a need to improve resource allocation in distributed clouds, especially in case of large-size user tasks.

One object of the invention, according to a first of its aspects, is a method for allocating resources in a distributed cloud including a plurality of interconnected datacenters for performing a user task requiring a plurality of virtual machines, the method comprising the steps of:

a) generating a plurality of sets of datacenters, each set comprising a different respective first datacenter and one or several additional datacenters, the additional datacenter(s) being iteratively selected among datacenter candidates chosen among not-yet selected datacenters of said plurality of datacenters, until covering the needs in virtual machines for performing the user task, at least by comparing communication cost values computed for each datacenter candidate based at least on the communication cost from already-selected datacenter(s) of the set to the current candidate and on an estimated communication cost induced by adding the remaining datacenters needed after selecting the current datacenter candidate, and

b) selecting a set of datacenters for performing the user task based at least on a comparison of the total communication costs of the sets of datacenters generated at step a).

The invention provides a network aware resource allocation method designed to select a traffic-efficient subset of datacenters for placing the virtual machines of a process-intensive user task. This invention targets inter-datacenters communications in distributed cloud networks.

The invention allows reducing the processing overhead for finding the sets of datacenters, by generating some optimum sets instead of all possible sets of the cloud. Finding all possible sets of the cloud which can cover all the needed virtual machines to perform a user task is indeed a time, energy and cost consuming procedure.

The invention derives a prediction-based greedy algorithm, combining the DDC and NSD metrics to make an appropriate decision. The invention solves the issue of finding the best datacenter considering both these metrics, through the computing of communication cost values using predictions of communication costs.

For adding a new datacenter to a set, the method according to the invention computes how much more bandwidth will be added if said datacenter is selected, by communicating among the current datacenter candidate and already-selected datacenters, and also by estimating, after selecting a current datacenter, how many datacenters should be added to cover all needed virtual machines. This procedure is applied for each datacenter candidate, and allows selecting the candidate with most appropriate bandwidth utilization, by establishing a trade-off between the number of datacenters and the communication costs among them.

The plurality of datacenters of the cloud may be mapped into a cloud graph, including all the datacenters in the cloud, and preferably at least a value representing the communication cost of the edge connecting two datacenters.

The datacenters of a generated set may be mapped into a sub-graph of datacenters. The generated sub-graphs thus cover all the needed virtual machines for the user task but their vertices number is not necessarily as many as the one of the cloud graph.

Thanks to the invention, bandwidth availability is improved by reducing network traffic in the distributed cloud. Acceptable energy consumption can be also guaranteed, by reducing the number of devices in use, for example servers and network elements. The method according to the invention can also satisfy delay or completion time of a large size task by distributing its virtual machines into closer datacenters.

The invention does not require knowing the inter-virtual machines traffic, as in prior-art techniques.

### Cloud graph

In a cloud graph, each pair of datacenters $V_i$ and $V_j$, able to cooperate with each other for performing the user task, is advantageously connected by one edge, having a communication cost $E_{ij}$, preferably included in the cloud graph. In the present invention, the term *"edge"* has to be understood as the path from a datacenter to another one in the cloud network.

The communication cost from one datacenter to another one takes advantageously into account the distance between the two datacenters and/or the number of intermediate devices between them.

A datacenters information table (DIT) containing information about the datacenters may be available in the cloud to be used for mapping the plurality of datacenters into the cloud graph. DIT may include information such as number of available virtual machines of each datacenter, location of datacenters or distance between each pair of datacenters. Each datacenter may register its information in the DIT and keep it updated.

### Generatingsets of datacenters

As many sets of datacenters as datacenters in the cloud are advantageously generated.

The communication cost value $C_i$ of the $i_{th}$ datacenter candidate $V_i$ may correspond to the sum of the communication cost $g_i$ from already-selected datacenter(s) of the current set to said candidate $V_i$ and on an estimated communication cost $h_i$ induced by adding the remaining datacenters needed after selecting the current datacenter candidate Vi: $C_i = g_i + h_i$. The communication cost value $C_i$ thus represents the total communication cost through the $i_{th}$ datacenter candidate.

The communication cost $g_i$ from already-selected datacenter(s) of a set to current datacenter candidate $V_i$ may be equal to the sum of all the communication costs $E_{ik}$ from each already-selected datacenter $V_k$ to said candidate $V_i$:

$$g\mathrm{i} = \sum_{k=1}^{z} (E_{ik}),$$

z being the number of already-selected datacenters in the set.

If, at this stage, the setcomprises only one datacenter, that is to say the respective first datacenter S of the set, the communication cost $g_i$ corresponds to the communication cost from said respective first datacenter S to the first datacenter candidate Vi: $gi = E_{is}$.

The estimated communication cost $h_i$ computes communication cost induced by adding the remaining datacenters (after selecting candidate $V_i$) to the set advantageously correspond to the product of the number NE of edges for connecting the remaining datacenters to already-selected datacenters, including current candidate $V_i$, required to cover all virtual machines needed for performing the user task after selecting said current candidate, with the estimated cost ED of each remaining edge: $h_i = NE \times ED$. The number NE of edges takes preferably into account edges connecting remaining needed datacenters together, and edges connecting remaining needed datacenters to already-selected datacenters, including current candidate $V_i$.

The resource allocation method according to the invention thus allows finding an admissible heuristic estimate of the communication cost induced by the addition to a set of the remaining datacenters needed after selecting the current datacenter candidate.

In other words, at current time, a number z of datacenters has already been selected and a number h of candidates remains. The computation of the estimated communication cost $h_i$depends on estimating how many more edges has to be added to cover all needed virtual machines if the $i_{th}$ candidate is selected to be added as $(z+1)_{th}$ datacenter of current set.

The number NE of remaining needed edges in a setadvantageously depend on the number $y$ of remaining needed datacenters and on the number z of already-selected datacenters in the set:

$$NE = \sum_{k=z+1}^{(z+1)+(y-1)} k.$$

The number $y$ of remaining needed datacenters may correspond to a ratio between the subtraction of the total number NVMs of virtual machines needed to perform the user task with a term corresponding to the sum between the number AVMs of already-allocated virtual machines and the number iVMs of free virtual machines of the current datacenter candidate, and the average number AvgVMs of free virtual machines of a datacenter:

$$y = \frac{\mathrm{NVMs} - (\mathrm{AVMs} + \mathrm{iVMs})}{\mathrm{AvgVMs}}.$$

The number of free virtual machines allocated to a datacenter corresponds to the capacity of said datacenter.

When at least two datacenters have been already selected for aset, the estimated cost ED of each remaining edge may be estimated by the average cost $E_{kj}$ of the edges connecting the already-selected datacenters z and the current candidate as $(z+1)_{th}$ element:

$$ED = \frac{\sum_{k=1}^{z+1} \sum_{j=k+1}^{z+1} E_{kj}}{z(z+1)/2}, \qquad if\ z \geq 2.$$

When selecting the second datacenter of aset, the estimated cost ED of each remaining edge may be estimated by the average cost between the respective first datacenter S of the setand all the other datacenters, computed by the sum of all the costs $E_{sk}$ divided by the number of remaining datacenters N-1:

$$ED = \frac{\sum_{k=1}^{N} E_{sk}}{N-1}, if\ z = 1.$$

Estimating the cost ED of each remaining edge this way is possible because the exact location of the datacenters in the cloud is known. According to the invention, estimating communication cost of next edges by computing average communication cost among previously selected nodes of a set is more accurate than computing average communication cost among all datacenters, and less time and energy consuming.

A-star algorithm may be used to compute the communication cost value $C_i$.

The datacenter candidate $V_i$ with the smaller communication cost value $C_i$ is advantageously selected to be added to the current set $F_n$.

**Selection of the best set of datacenters**

The set $F_B$ of datacenters V with the smallest total communication cost is advantageously selected for performing the user task.

The total communication cost E of a set F may correspond to the sum of the communication costs of all the edges in said set.

**Computer program product**

Another object of the invention is a computer program product comprising instructions that can be read by a computer infrastructure of a distributed cloud computing including a plurality of interconnected datacenters for performing a user task requiring a plurality of virtual machines, the computer infrastructure comprising at least one processor, these instructions controlling the operation of said computer infrastructure so that:

a) a plurality of sets of datacenters is generated, each set comprising a different respective first datacenter and one or several additional datacenters, the additional datacenter(s) being iteratively selected among datacenter candidates chosen among not-yet selected datacenters of said plurality of datacenters, until covering the needs in virtual machines for performing the user task, at least by comparing communication cost values computed for each datacenter candidate based at least on the communication cost from already-selected datacenter(s) of the set to the current candidate and on an estimated communication cost induced by adding the remaining datacenters needed after selecting the current datacenter candidate, and

b) a set of datacenters for performing the user task is selected based at least on a comparison of the total communication costs of the sets of datacenters generated at step a).

All of the features defined for the method apply to the computer program product.

**Resource allocation system**

Another object of the invention is a system for allocating resources in a distributed cloud computing including a plurality of interconnected datacenters for performing a user task requiring a plurality of virtual machines, the system comprising:

- a prediction-based datacenter selector,
- an optimum sets generator configured to generate a plurality of sets of datacenters, each set comprising a different respective first datacenter and one or several additional datacenters, the additional datacenter(s) being iteratively selected by the prediction-based datacenter selector among datacenter candidates chosen among not-yet selected datacenters of said plurality of datacenters, until covering the needs in virtual machines for performing the user task, at least by comparing communication cost values computed for each datacenter candidate based at least on the communication cost from already-selected datacenter(s) of the set to the current candidate and on an estimated communication cost induced by adding the remaining datacenters needed after selecting the current datacenter candidate, and
- a best set selector configured to select a set of datacenters for performing the user task based at least on a comparison of the total communication costs of the sets of datacenters generated by the optimum sets generator.

The resource allocation system according to the invention may further comprise a datacenters information table containing information about the datacenters, and a datacenters graph generator, being configured to use said table to map the plurality of datacenters into a cloud graph.

In a preferred embodiment, if the already-selected datacenters of a set are still not enough to cover all the virtual machines needed for performing the user task, the optimum sets generator is configured to send a datacenter request to the prediction-based datacenter selector to find an appropriate datacenter.

When a new datacenter request comes from the optimum sets generator, the prediction-based datacenter selector is configured to receive a first sub-set $AI$ of already-selected datacenters and a second sub-set P of datacenter candidates, corresponding to not-yet selected datacenters in the cloud. For example, considering N datacenters in the cloud, z of them having been already selected and included in the current set and in said first sub-set $AI$, then second sub-set $P$ has $h$=N-z current candidates. Therefore, the resource allocation system according to the invention is configured to select the $(z+1)_{th}$ datacenter from the second sub-set $P$, by finding the minimum value of the communication cost value $C_i$, as previously described.

All of the features defined for the method apply to the system, and vice-versa.

The invention will be better understood on reading the following detailed description of non-limiting exemplary embodiment thereof and on examining the appended drawings in which:

- Figure 1, previously described, illustrates a general framework of a cloud computing;
- Figure 2 represents a diagram illustrating different steps of the cloud resource allocation method according to the invention;
- Figure 3 shows the generation of sets from a cloud graph of datacenters according to the invention; and
- Figure 4 shows some simulation results of the resource allocation method according to the invention, compared to results obtained with state-of-the-art methods.

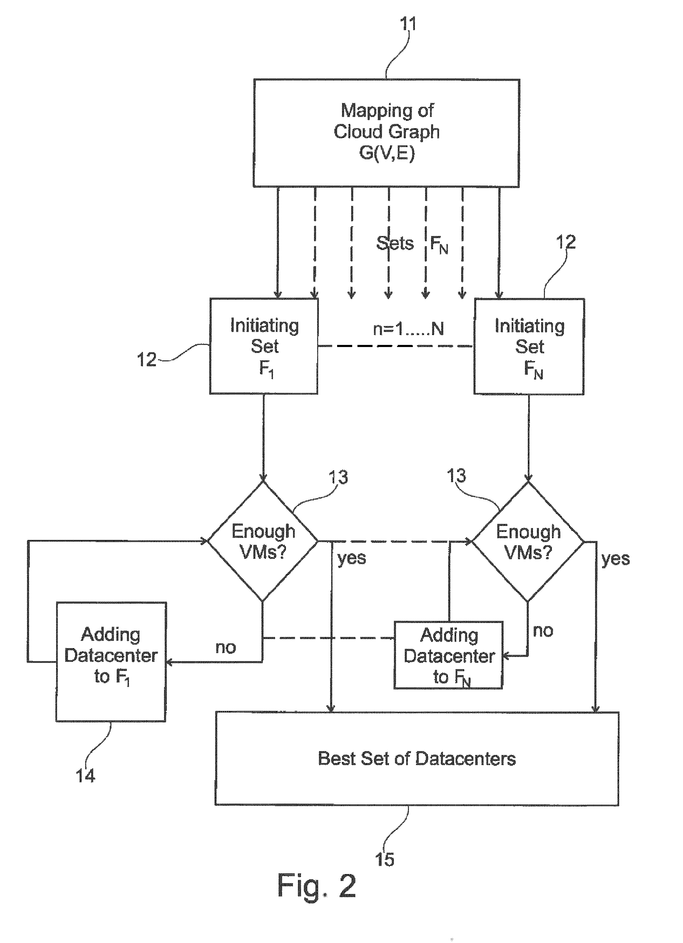

Steps of the resource allocation method in a distributed cloud computing according to the invention are shown in the diagram of Figure 2. Said resource allocation method may be implemented through a resource allocation system, preferably comprising a datacenters graph generator, a prediction-based datacenter selector, an optimum sets generator, and a best set selector.

The distributed cloud computing advantageously comprises a plurality N of datacenters V and is dedicated to perform a user task requiring a plurality NVM of virtual machines VM, allocated to the datacenters V.

As shown in Figure 2, at a step 11, for example thanks to the datacenters graph generator, the plurality N of datacenters V is mapped into a cloud graph G(V, E), including all the datacenters V in the cloud and at least a value $E_{ij}$ representing the communication cost of the edge connecting two datacenters $(V_i, V_j)$ able to cooperate with each other for performing the user task.

At a step 12, a set $F_1$ is generated by selecting a first datacenter $V_1$ of the cloud graph G mapped at step 11, for example thanks to the optimum sets generator. At a step 13, the optimum sets generator checks if the already-selected datacenter covers enough virtual machines for performing the user task. If all virtual machines can be allocated, the generation of the set $F_1$ is done. Otherwise, by jumping to step 14, one datacenter $V_{i+1}$is iteratively selected to be added to this set $F_1$, for example thanks to prediction-based datacenter selector. This selection is done by choosing the candidate with the smallest communication cost value $C_i$, computed for each datacenter candidate $V_i$, and depending at least on the communication cost $g_i$ from already-selected datacenter(s) of the current set $F_1$ to the current candidate $V_i$ and on an estimated communication cost $h_i$ induced by adding the remaining datacenters needed after selecting the current datacenter candidate. These loop-steps 13 and 14 continue until covering all virtual machines NVM needed for performing the user task.

For creating each set, above mentioned procedure should be done, by starting each time from a different datacenter, as shown in Figure 2.

At a step 15, the total communication costs of all sets F are compared, and the set $F_B$ of datacenters V allowing to perform the user task with the smallest communication cost is selected, for example *via* the best set selector.

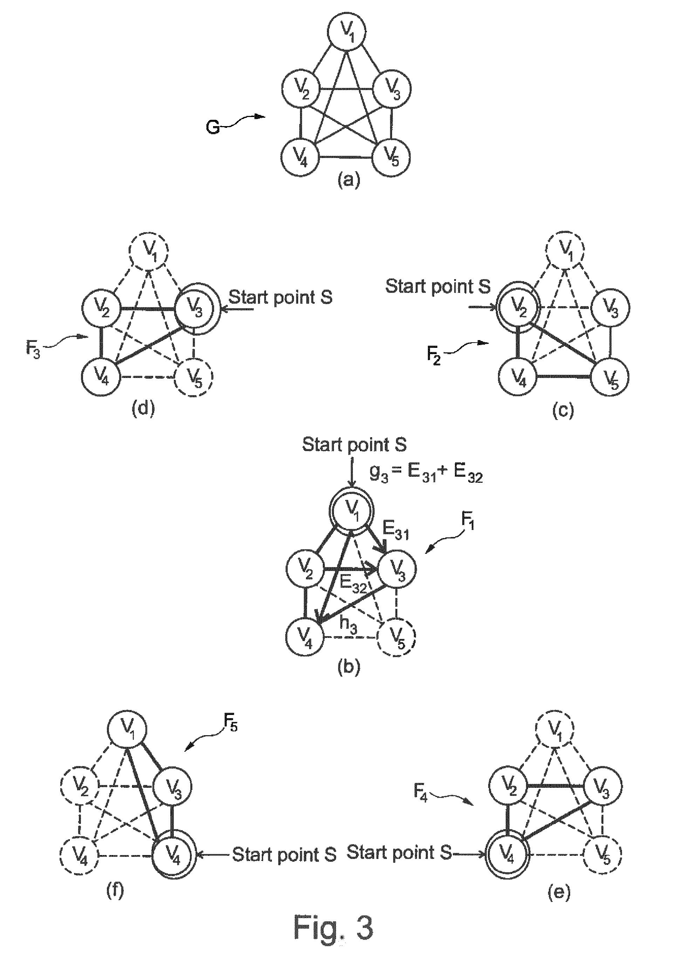

In the exemplary embodiment represented at Figure 3, from a cloud graph G comprising N = 5 datacenters, represented at Figure3(a), to generatethe first set $F_1$, the first datacenter $V_1$ is selected as respective first datacenter S of the set, as represented at Figure3(b). If datacenter $V_1$does not have enough capacity for allocating all NVM needed virtual machines, at least one additional datacenter had to be added to the set $F_1$. In the exemplary embodiment, three datacenters $V_2$, $V_3$ and $V_4$ has to be added to set $F_1$ starting from datacenter $V_1$ to cover all the virtual machines NVM needed for performing the user task. As previously described, for each datacenter candidate $V_i$, is computed a communication cost value $C_i = g_i + h_i$, equal to the sum of the communication cost $g_i$ from already-selected datacenter(s) of the set to the current candidate $V_i$ and an estimated communication cost $h_i$ induced by adding to the set the remaining datacenters needed after selecting the current datacenter candidate. The candidate with the smallest communication cost value is selected.

As previously described, considering for example as currentdatacenter candidate the $V_3$ datacenter, the communication cost $g_3$ from already-selected datacenters $V_1$ and $V_2$of set $F_1$to current datacenter candidate $V_3$ is equal to the sum of the communication costs $E_{3k}$ from each already-selected datacenter $V_k$ to said candidate $V_3$:

$$g3 = \sum_{k=1}^{2} (E_{3k}) = E_{31} + E_{32}.$$

In this example, one datacenter V4 is further needed, and thus the estimated communication cost $h_3$ induced by adding the remaining needed datacenter $V_4$ corresponds to the product of the number NE of edges for connecting the remaining datacenter to the set with the estimated cost ED of each remaining edge:

$h_3 = NE$ x $DE$, giving an estimated cost for $(E_{41} + E_{42} + E_{43})$,

with $NE = \sum_{k=z+1}^{(z+1)+(y-1)} k = 3$, and $ED = \dfrac{\sum_{k=1}^{z+1} \sum_{j=k+1}^{z+1} E_{kj}}{z(z+1)/2} = (E_{31} + E_{21} + E_{32})/3,$

with z = 2 and $y = \dfrac{NVMs - (AVMs + iVMs)}{AvgVMs} = 1.$

It goes the same for sets F2, F3, F4 and F5, as represented at Figure 3(c), 3(d) ,3(e) and 3(f). After generating the first set $F_1$ started from datacenter $V_1$, the method of the invention generates a second set $F_2$ using the second datacenter $V_2$ as respective first datacenter of the set. This procedure continues until each datacenter is selected once as a respective first datacenter of a set. Finally, N optimal sets are generated, as shown in Figure 3.

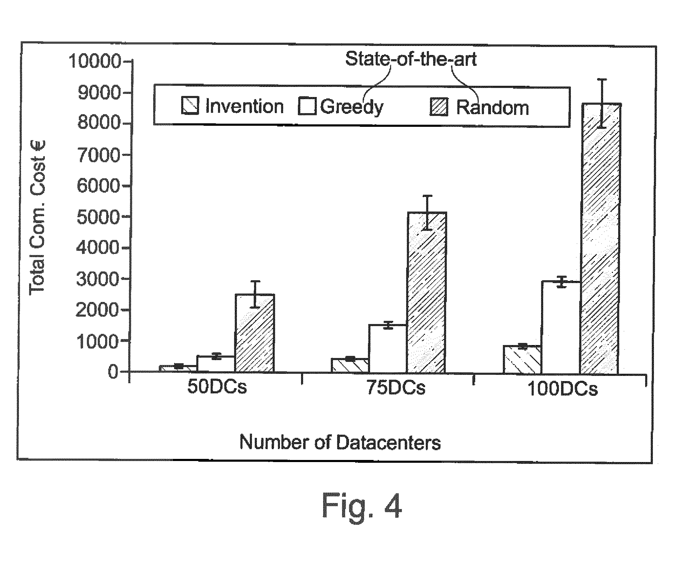

Some results of the resource allocation method in terms of communication costs E, depending on the number of datacenters N, are shown at Figure 4. The method according to the invention is compared with the Random and Greedy algorithms, previously described.

These results show that the invention allows reducing communication cost in comparison to known algorithms. Furthermore, by increasing the number of datacenter candidates, performance of the method according to the invention increases.

By installing and running the invention in a distributed cloud, a visible improvement in available network bandwidth of the cloud is advantageously seen, for example by using network monitoring tools such as Path view Cloud.

The invention is not limited to the example that has just been described.

The invention is not limited to any particular number of datacenters in the cloud infrastructure.

Other algorithms may be used for computing the communication cost value $C_i$.

In addition to hop count or number of intermediate network elements between two datacenters, any other reasonable measure may be used for computing communication cost $C_i$.

The resource allocation method according to the invention may be simulated by cloud simulators, as for example CloudSim.

An application of the present invention may be weather forecasting. Steerable weather radars can produce data at a rate of nearly 200 megabits per second. Cloud datacenters have to aggregate data feeds from these radars, process these data, and use the results to steer each radar in subsequent observations. This process allows tracking fast moving weather phenomena, such as thunderstorms and tornadoes. The sensors may send unpredictable requests to the distributed cloud, as they are not static data sources and their needs are driven by unpredictable real world events. For example, during intense thunderstorms, weather radars may produce more data and require higher processing and bandwidth than during periods of calm. The resource allocation method according to the invention may help making the best use of the available bandwidth on the cloud.

The resource allocation method according to the invention helps cloud providers, as Information Technology (IT) companies, to increase their revenue by effectively using their leased/own bandwidth link.

The expression *"comprising a"* or *"inclatding a"* must be understood as being synonymous with *"comprising at least one"* or *"inclatding at least one",* unless specified otherwise.

## Claims

1. Method for allocating resources in a distributed cloud computing including a plurality (N) of interconnected datacenters (V) for performing a user task requiring a plurality (NVM) of virtual machines (VM), the method comprising:

   a) generating a plurality of sets (F) of datacenters, each set ($F_n$) comprising a different respective first datacenter (V) and one or several additional datacenters, the additional datacenter(s) being iteratively selected among datacenter candidates ($V_i$) chosen among not-yet selected datacenters of said plurality of datacenters, until covering the needs in virtual machines (NVM) for performing the user task, at least by comparing communication cost values ($C_i$) computed for each datacenter candidate ($V_i$) based at least on the communication cost (*gi*) from already-selected datacenter(s) of the set ($F_n$) to the current candidate ($V_i$) and on an estimated communication cost ($h_i$) induced by adding the remaining datacenters needed after selecting the current datacenter candidate, and
   b) selecting a set ($F_B$) of datacenters (V) for performing the user task based at least on a comparison of the total communication costs of the sets (F) of datacenters generated at step a).

2. Method according to claim 1, wherein the datacenter candidate ($V_i$) with the smaller communication cost value ($C_i$) is selected to be added to the current set ($F_n$).

3. Method according to claim 1or 2, wherein the set ($F_B$) of datacenters (V) with the smaller total communication cost is selected for performing the user task.

4. Method according to any one of claims 1 to 3, wherein the communication cost value ($C_i$) of a datacenter candidate ($V_i$) corresponds to the sum of the communication cost ($g_i$) from already-selected datacenter(s) of the current set to said candidate ($V_i$) and on an estimated communication cost ($h_i$) induced by adding the remaining needed datacenters.

5. Method according to any one of claims 1 to 4, wherein the communication cost ($g_i$) from already-selected datacenter(s) of a set to current datacenter candidate ($V_i$) is equal to the sum of all the communication costs ($E_{ik}$) from each already-selected datacenter ($V_k$) to said candidate ($V_i$): $gi = \sum_{k=1}^{z}(E_{ik})$.

6. Method according to any one of the preceding claims, wherein the estimated communication cost ($h_i$) induced by

adding the remaining needed datacenters corresponds to the product of the number (NE) of edges for connecting the remaining datacenters ($y$), required to cover all virtual machines needed for performing the user task after selecting said current candidate ($V_i$), with the average estimated cost (ED) of the remaining edges.

7.  Method according to the preceding claim, wherein the number (NE) of remaining needed edges in a set ($F_n$) depends on the number ($y$) of remaining needed datacenters and on the number ($z$) of already-selected datacenters in the set: $NE = \sum_{k=z+1}^{(z+1)+(y-1)} k$.

8.  Method according to the preceding claim, wherein the number ($y$) of remaining needed datacenters corresponds to the ratio $\left(\frac{NVMs-(AVMs+iVMs)}{AvgVMs}\right)$ between the subtraction of the total number (NVMs) of virtual machines needed to perform the user task with a term corresponding to the sum between the number (AVMs) of already-allocated virtual machines and the number (iVMs) of free virtual machines of the current datacenter candidate ($V_i$), and the average number (AvgVMs) of free virtual machines of a datacenter.

9.  Method according to any one of claims 6 to 8, wherein, when at least two datacenters have been already selected for a set ($F_n$), the estimated cost (ED) of the remaining edges is estimated by the average cost ($E_{kj}$) of the edges connecting the ($z$) already-selected datacenters of the set (Fn): $ED = \dfrac{\sum_{k=1}^{z+1}\sum_{j=k+1}^{z+1} E_{kj}}{z(z+1)/2}$.

10. Method according to any one of claims 6 to 8, wherein, when selecting the second datacenter of a set ($F_n$), the estimated cost (ED) of the remaining edges corresponds to the average cost between the respective first datacenter (S) of the set and all the additional datacenters, computed by the sum $\dfrac{\sum_{k=1}^{N} E_{sk}}{N-1}$ of all the communication costs ($E_{sk}$) divided by the number of remaining datacenters (N-1).

11. Method according to any one of the preceding claims, wherein A-star algorithm is used to compute the communication cost value ($C_i$).

12. Method according to any one of the preceding claims, wherein the plurality (N) of datacenters is mapped into a cloud graph (G(V, E)), including all the datacenters (V) in the cloud, and preferably at least a value ($E_{ij}$) representing the communication cost of the edge connecting two datacenters ($V_i$, $V_j$).

13. A computer program product comprising instructions that can be read by a computer infrastructure of a distributed cloud computing including a plurality (N) of interconnected datacenters (V) for performing a user task requiring a plurality (NVM) of virtual machines (VM), the computer infrastructure comprising at least one processor, these instructions controlling the operation of said computer infrastructure so that:

    a) a plurality of sets (F) of datacenters is generated, each set comprising a different respective first datacenter (V) and one or several additional datacenters, the additional datacenter(s) being iteratively selected among datacenter candidates ($V_i$) chosen among not-yet selected datacenters of said plurality of datacenters, until covering the needs in virtual machines (NVM) for performing the user task, at least by comparing communication cost values ($C_i$) computed for each datacenter candidate ($V_i$) based at least on the communication cost ($g_i$) from already-selected datacenter(s) of the set ($F_n$) to the current candidate ($V_i$) and on an estimated communication cost ($h_i$) induced by adding the remaining datacenters needed after selecting the current datacenter candidate, and
    b) a set ($F_B$) of datacenters (V) for performing the user task is selected based at least on a comparison of the total communication costs of the sets (F) of datacenters generated at step a).

14. System for allocating resources in a distributed cloud computing including a plurality (N) of interconnected datacenters (V) for performing a user task requiring a plurality (NVM) of virtual machines (VM), the system comprising:

- a prediction-based datacenter selector,
- an optimum sets generator configured to generate a plurality of sets (F) of datacenters, each set comprising a different respective first datacenter (V) and one or several additional datacenters, the additional datacenter(s) being iteratively selected by the prediction-based datacenter selector among datacenter candidates ($V_i$) chosen among not-yet selected datacenters of said plurality of datacenters, until covering the needs in virtual machines (NVM) for performing the user task, at least by comparing communication cost values ($C_i$) computed for each datacenter candidate ($V_i$) based at least on the communication cost ($g_i$) from already-selected datacenter(s) of the set ($F_n$) to the current candidate ($V_i$) and on an estimated communication cost ($h_i$) induced by adding the remaining datacenters needed after selecting the current datacenter candidate, and
- a best set selector configured to select a set ($F_B$) of datacenters (V) for performing the user task based at least on a comparison of the total communication costs of the sets (F) of datacenters generated by the optimum sets generator.

15. System according to claim 14, wherein, if the already-selected datacenters (z) of a set ($F_n$) are still not enough to cover all the virtual machines (NVM) needed for performing the user task, the optimum sets generator is configured to send a datacenter request to the prediction-based datacenter selector to find an appropriate datacenter.

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAO YAN ET AL: "A Network-Aware Virtual Machine Allocation in Cloud Datacenter", 19 September 2013 (2013-09-19), GRID AND COOPERATIVE COMPUTING - GCC 2004 : THIRD INTERNATIONAL CONFERENCE, WUHAN, CHINA, OCTOBER 21 - 24, 2004 IN: LECTURE NOTES IN COMPUTER SCIENCE , ISSN 0302-9743 ; VOL. 3251; [LECTURE NOTES IN COMPUTER SCIENCE , ISSN 1611-3349], SPRINGER VERLAG,, XP047041332, ISSN: 0302-9743 ISBN: 978-3-642-36699-4 * abstract * * pages 73-78 * | 1-15 | INV. G06F9/50 |
| X | WO 2015/036943 A1 (ERICSSON TELEFON AB L M [SE]) 19 March 2015 (2015-03-19) * page 13, line 4 - line 15 * | 1-15 | |
| X | US 2013/031559 A1 (ALICHERRY MANSOOR A [US]) 31 January 2013 (2013-01-31) * paragraphs [0017] - [0018], [0038], [0041], [0061] - [0085], [0100] * | 1-15 | TECHNICAL FIELDS SEARCHED (IPC)  G06F |

The present search report has been drawn up for all claims

| Place of search | Date of completion of the search | Examiner |
|---|---|---|
| The Hague | 20 November 2015 | Balevic, Ana |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 30 5749

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2015

| Patent document cited in search report | | Publication date | Patent family member(s) | | Publication date |
|---|---|---|---|---|---|
| WO 2015036943 | A1 | 19-03-2015 | US | 8817625 B1 | 26-08-2014 |
| | | | WO | 2015036943 A1 | 19-03-2015 |
| US 2013031559 | A1 | 31-01-2013 | CN | 103797463 A | 14-05-2014 |
| | | | EP | 2737401 A1 | 04-06-2014 |
| | | | JP | 2014522036 A | 28-08-2014 |
| | | | KR | 20140027518 A | 06-03-2014 |
| | | | US | 2013031559 A1 | 31-01-2013 |
| | | | WO | 2013015905 A1 | 31-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013085703 A

- US 20120324112 A

**Non-patent literature cited in the description**

- **DONG et al.** energy saving victual machine placement in cloud, data centerss. *13th IEEE/ACM international symposium on cluster, cloud, and grid computing,* 2013
- **MENG et al.** improving the scalability of datacenter network with traffic-aware victual machine placement. *Proceedings of the 29th conference on Information communications,* 2010

- **XIN LI et al.** Let's Stay Together: Towards Traffic Aware Virtual Machine Placement in Data Centers''. *Proceedings of the 33rd IEEE International Conference on Computer Communications,* 2014
- **ALICHERRY et al.** Network-Aware Resource Allocation in Distributes Clouds. *IEEE conference on Information communications,* 2012